# EUROPÄISCHE PATENTSCHRIFT

(11) **EP 1 035 411 B1**
(45) Veröffentlichungstag und Bekanntmachung des Hinweises auf die Patenterteilung: **12.09.2007**
(21) Anmeldenummer: 99890077.3
(22) Anmeldetag: 05.03.1999
(51) Int. Cl.: G01N 27/333

(54) **Elektrochemischer Sensor**
Electrochemical sensor
Capteur électrochimique

(43) Veröffentlichungstag der Anmeldung: 13.09.2000
(73) Patentinhaber: F.HOFFMANN-LA ROCHE AG, 4070 Basel (CH)
(72) Erfinder: Steiner, Gregor, Dipl.-Chem., 8010 Graz (AT); Schaffar, Bernhard, Dr., 8045 Graz (AT); Schinnerl, Marie-Luise, 8102 Semriach (AT); Ritter, Christoph, Dr., 8045 Graz (AT)
(74) Vertreter: Babeluk, Michael

(56) Entgegenhaltungen:
- EP-A- 0 190 005
- EP-A- 0 603 154
- EP-A- 0 651 248
- DE-A- 3 840 962
- DE-A- 19 506 863
- GB-A- 2 289 541
- US-A- 4 613 422
- US-A- 4 739 380
- US-A- 5 352 352
- US-A- 5 507 936
- PATENT ABSTRACTS OF JAPAN vol. 013, no. 351 (P-912), 7. August 1989 (1989-08-07) & JP 01 112148 A (TERUMO CORP), 28. April 1989 (1989-04-28) & DATABASE WPI Derwent Publications Ltd., London, GB; AN 89-169993 [25]
- VAN DER SPIEGEL J ET AL: "The extended gate chemically sensitive field effect transistor as multi-species microprobe" SENSORS AND ACTUATORS, OCT. 1983, SWITZERLAND, Bd. 4, Nr. 2, Seiten 291-298, XP002111737 ISSN: 0250-6874
- W.GÖPEL ET AL. (EDTS.): "Sensors - A Comprehensive Survey, Volume 2, Chemical and Biochemical Sensors, Part I" 1991 , VCH PUBLISHERS INC. , NEW YORK XP002111738 p.239-339, Friedrich Oehme: "Liquid Electrolyte Sensors: Potentiometry, Amperometry, and Conductometry" * Seite 244, Zeile 11 - Seite 245, Zeile 7 * * Seite 266, Zeile 21 - Seite 267, Zeile 17 * * Seite 283; Abbildungen 7-35 *

## Beschreibung

Die Erfindung betrifft einen elektrochemischen Sensor, gemäß dem Oberbegriff von Patentanspruch 1.

Unter Schichttechnologie werden ganz allgemein Verfahren der Dünn- und Dickschichttechnik verstanden, wie z.B. Sputter- und Vakuumbeschichtungsverfahren, Siebbdruck- und Dispensierverfahren, als auch Tampondruckverfahren oder galvanische Abscheidung.

Derartige elektrochemische Sensoren, welche amperometrisch oder potentiometrisch betrieben werden können, sind über deren elektrochemisch aktive Sensorschicht primär geeignet, beispielsweise den pH-Wert oder die H₂O₂-Konzentration zu bestimmen. Neben diesen primären Größen können allerdings durch Variationen im Sensoraufbau auch Größen bestimmt werden, welche den pH-Wert bzw. die H₂O₂-Konzentration beeinflussen bzw. verändern. So kann beispielsweise eine pH-empfindliche Schicht eines Platinmetalloxides mit einer hydrophoben, für CO₂-durchlässigen Schicht bedeckt werden, so daß über den sich ändernden pH-Wert, auf die CO₂-Konzentration geschlossen werden kann.

Weiters ist es beispielsweise bekannt, MnO₂ für die anodische Umsetzung von Wasserstoffperoxyd in ein geeignetes Elektrodenmaterial einzubringen. Basierend darauf ist aus der EP 0 603 154 eine amperometrische Enzymelektrode bekannt geworden, welche ein im porösen Elektrodenmaterial immobilisiertes bzw. adsobiertes Enzym aufweist. Abhängig von der Konzentration des entsprechenden Enzymsubstrates in einer Probe ändert sich die Konzentration von Wasserstoffperoxyd, welche mit Hilfe der anodischen Umsetzung gemessen werden kann.

In den folgenden Ausführungen werden im Zusammenhang mit dem Begriff "elektrochemischer Sensor" im wesentlichen nur dessen elektrochemisch aktive Basisschicht und die Elemente zur Ableitung des elektrischen Signales verstanden, wobei weitere Zusatzstoffe bzw. zusätzliche Schichten zur Überführung einer chemischen Größe in eine andere nur beispielhaft, jedoch nicht erschöpfend beschrieben werden. So ist es zum Beispiel bei dem aus der EP 0 603 154 bekannt gewordenen amperometrischen Meßverfahren nicht unbedingt erforderlich, daß das Enzym auf der porösen Basiselektrode immobilisiert ist; die enzymatische Reaktion könnte auch außerhalb des Sensors erfolgen.

Die seit längerem bekannte pH-Empfindlichkeit der Platinmetalloxide ermöglicht die Entwicklung von potentiometrischen pH-Sensoren (bzw. Sensoren, die sich letztlich auf die Messung des pH-Wertes.reduzieren lassen). Die Fertigung von miniaturisierten planaren Sensoren auf Metalloxidbasis zur Bestimmung des pH-Wertes erfolgt in erster Linie mittels der Dickschichttechnik. Dabei gelangen sowohl die konventionelle wie auch zunehmend die polymere Dickschichttechnik zur Anwendung.

Beispielsweise ist aus der DE 195 06 863 A1 ein pH-Sensor in Dickschichttechnik und ein Verfahren zu seiner Herstellung bekannt geworden. Der genannte Sensor nutzt Rutheniumoxid als elektrochemisch aktiven Bestandteil, wobei die den elektrochemisch aktiven Bestandteil enthaltende Schicht mittels polymerer Dickschichttechnik auf ein Substrat aufgebracht wird. Die einzelnen Schichten werden wie folgt aufgetragen: Zunächst wird eine Leiterbahn aus Silber aufgebracht, danach die elektrochemisch aktive Schicht, bestehend aus einer Mischung aus Rutheniumdioxid mit einer in der polymeren Dickschichttechnik üblichen Paste zur Herstellung von Isolationsschichten. Zuletzt wird eine nichtleitende Isolationsschicht aufgetragen. Die Schichten werden durch Tempern in einem Ofen ausgehärtet.

Weiters ist aus der DE 44 30 662 A1 eine Iridiumoxidelektrode zur Messung des pH-Wertes sowie ein Verfahren zu ihrer Herstellung bekannt geworden. Auf einem organischen oder anorganischen Substrat befindet sich eine pH-sensitive Schicht, die oxidiertes Iridiumpulver enthält. Zur Herstellung der Elektrode wird Iridiumoxidpulver mit organischen und/oder anorganischen Bindemitteln vermischt und in Form einer Paste im Siebdruckverfahren auf das Substratmaterial aufgetragen. Die genannten Iridium-pH-Elektroden sind zur pH-Messung sowie als Grundsensoren für Biosensoren und Gassensoren vorgesehen. Als Substrat dient hier beispielsweise ein Keramiksubstrat, auf welchem in einem ersten Druckschrift eine Kontaktbahn aufgebracht wird. Im zweiten Druckschritt wird die Kontaktbahn mit einer Polymerisolierung abgedeckt, wobei eine Kontaktfläche freigehalten und im dritten Druckschritt eventuell nach Einbringen einer Zwischenschicht die iridiumoxidhaltige Dickschichtpaste aufgetragen wird.

Bei den bekannten Metalloxidsensoren ist somit die Reihenfolge der Druckschritte, zumindest jener der elektrischen Ableitung und der Metalloxidschicht zwingend vorgeschrieben. Das kann z. B. dann von Nachteil sein, wenn an der Übergangsstelle zwischen unterschiedlichen Materialien Risse auftreten, welche die Leitfähigkeit und damit die Funktionstüchtigkeit des Sensors beeinträchtigen.

Ein weiteres Problem besteht vor allem darin, daß die elektrochemisch aktiven Sensorschichten, welche ein Oxid der Metalle Mn, Ru, Ir, oder Pt beinhalten, eine Oberflächenstruktur aufweisen, oder eine chemische Substanz enthalten, welche einen Durchgriff der Meßlösung durch die Sensorschicht hindurch auf die Leiterbahn ermöglichen. Dabei kann es sowohl zu Drifterscheinungen (z. B. durch Quellvorgänge) wie auch zu Korrosionserscheinungen (Entstehung von Lokalelementen), wie z. B. bei dem System Rutheniumoxid/Silber kommen. Negative Auswirkungen sind auch bei Arbeitselektroden zu erwarten, welche MnO₂ als elektrochemisch aktive Komponente enthalten. Durch die Quellung im wäßrigen Milieu entstehen ebenfalls Lokalelemente, welche die elektrochemischen Eigenschaften des Sensors stören (Verfälschung des H₂O₂-Signals, Interferenzanfälligkeit, pH-Effekte).

In "Sensors and Actuators" B 48, 1998, 505-511 wird in diesem Zusammenhang die Abnahme des pH-Signals während der Lagerung einer planaren Dickfilm pH-Elektrode, basierend auf Rutheniumdioxid, beschrieben. Bei genauer Betrachtung der Lagerbedingungen läßt sich erkennen, daß hier eine korrosive Zerstörung des Sensors stattfindet. Rutheniumoxid besitzt nämlich im sauren pH-Bereich (ca. pH 2) ein Standardpotential von 0,86 V für den Übergang von Ru(IV) zu Ru(III) und vermag somit Silber zu oxidieren, was eine Erklärung für die beobachtete korrosive Zerstörung liefert. Als möglicher Lösungsansatz für dieses Problem wird zwischen der elektrochemisch aktiven Sensorschicht und der Ableitung eine gedruckte, spotförmige Zwischenschicht vorgeschlagen. Neben dem Nachteil eines zusätzlichen Druckschrittes, welcher die Herstellungskosten erhöht, hat sich gezeigt, daß durch derartige Zwischenschichten bei längerem Gebrauch (ca. 1 Tag) Ag-Ionen durchdiffundieren und somit ebenfalls eine Beeinträchtigung der elektrochemisch aktiven Sensorschicht auftritt.

Bei Sensoren, welche zur Detektion von H₂O₂ als sensorische Komponente MnO₂ enthalten, sind ebenfalls Störungen durch diffundierende Ag-Ionen zu beobachten. Gekennzeichnet sind diese Störungen u.a. durch plötzliche kurzfristige Stromflüsse, hervorgerufen durch eine Entladung der als Kondensator wirkenden polarisierten amperometrischen Arbeitselektroden. Zusätzlich sind die Polarisationszeiten bei Erstinbetriebnahme des Sensors verlängert, als auch eine Veränderung der Elektrode in ihrem Verhalten gegenüber elektrochemischen Interferenten wie z.B. Harnsäure oder gegenüber Lösungen mit verschiedenen pH-Werten über die Standzeit dieser Elektroden zu beobachten ist.

Aus der US 5, 707, 502 A ist ein Sensor zur Messung der Analytkonzentration bekannt, bei dem die elektrochemisch aktive Sensorschicht Pt, Pa, Ir, Rh oder ein entsprechendes Oxid enthält. Die Leiterbahn besteht im Bereich des sensorspots aus einer Dickschichtpaste, welche Pt enthält, wobei der Signalabgriff der Leiterbahn, sowie die jenigen Teile der Leiterbahn, die den Signalabgriff mit dem Sensorspot verbinden, aus einem anderen Material, insbesondere aus Au bestehen können Die Kontaktierung der Leiterbahn mit der Sensorschicht erfolgt innerhalb des Messbereich des Sensors.

Aufgabe der vorliegenden Erfindung ist es, elektrochemische Sensoren der eingangs beschriebenen Art derart weiterzubilden, daß der Sensor nach wie vor billig und auf einfache Weise mittels Dickschichttechnologie herstellbar ist, wobei Interferenzen zwischen Leiterbahn und elektrochemisch aktiver Sensorschicht vermieden werden sollen.

Diese Aufgabe wird erfindungsgemäß entsprechend einem ersten Aspekt der Erfindung durch die Merkmale von Patentanspruch 1 und entsprechend einem zweiten Aspekt durch die Merkmale von Patentanspruch 3 gelöst. Erfindungsgemäß wird somit der problematische Übergang von der elektrochemisch aktiven Sensorschicht zur Leiterbahn in Bereiche außerhalb des eigentlichen Meßbereiches verschoben. Dieser Meßbereich wird im allgemeinen durch die Öffnung in der Deck- oder Isolierschicht eines planaren Sensors definiert, bzw. durch einen Probenkanal, über welchen der sensitive Bereich der Sensorschicht von der Probe kontaktiert werden kann. Die Brückenschicht kann somit aus dem Meßbereich heraus bzw. unter einer allfälligen Meßkammerbegrenzung bzw. Meßkanalbegrenzung durchgeführt werden und kontaktiert die Leiterbahn erst außerhalb des eigentlichen Meßbereiches. Da die gedruckten Schichten sehr dünn sind (ca. 3 bis 20 µm) ist eine laterale Diffusion von Silberionen, zumindest über die Lebensdauer des Sensors, auszuschließen. Insbesondere dann, wenn das Verhältnis aus Länge 1 der Brückenschicht zu deren Dicke d größer 5 vorzugsweise größer 50 ist.

Gemãß dem zweiten Aspekt wird für die Brückenschicht ein Carbonleiter verwendet, welcher für die kurze Strecke von wenigen mm eine ausreichende Leitfähigkeit besitzt. Die Leiterbahn kann dabei aus herkömmlichen Materialien, beispielsweise aus Silber oder Kupfer, bestehen. Eine Fertigung der gesamten Leiterbahn aus Carbon wäre insofern unbrauchbar, da Carbonleiterbahnen einen Widerstand im Bereich von 0,5 bis mehrere 1000 kΩ/cm besitzen und somit für amperometrische Anwendungen eine ungenügende Leitfähigkeit besitzen würden.

Gemäß dem ersten Aspekt der Erfindung ist vorgesehen, daß die Brückenschicht aus dem Material der elektrochemisch aktiven Sensorschicht besteht und vorzugsweise in einem Arbeitsgang mit der Sensorschicht auf das Substrat aufbringbar ist. Bei dieser vorteilhaften Ausführungsvariante reicht das Material der elektrochemisch aktiven Sensorschicht über das eigentliche Meßfenster hinaus und bildet zumindest einen Teil der elektrischen Ableitung. Die Kontaktierung mit der Leiterbahn aus Silber oder Kupfer erfolgt abseits von jenem Bereich, in dem negative Beeinflussungen durch die Probe stattfinden können. Die Verwendung der elektrochemisch aktiven Sensorschicht als Brückenschicht ist vor allem bei rutheniumoxidhaltigen Schichten möglich, da diese nur einen sehr geringen Widerstand von ca. 100 Ω aufweisen. Vorteilhafterweise kommt diese Ausführungsvariante mit einer geringen Anzahl von Druckschritten und verwendeten Materialien aus.

In einer Ausführungsvariante mit besonders vorteilhaften elektrochemischen Eigenschaften ist vorgesehen, daß die elektrochemische aktive Sensorschicht zumindest ein Oxid der Metalle der VIII Nebengruppe des Periodensystems, vorzugsweise RuO₂, sowie als Bindemittel organische Polymere, vorzugsweise Polyvinylacetat, Polyurethan oder Epoxiharze enthält.

### Beispiel für elektrochemisch aktive Sensorschicht mit RuO₂:

Rutheniumoxid und Isolationspaste werden in einem Verhältnis zwischen 1:2 und 2:1 Gewichtsteilen miteinander vermengt, mit einem Dreiwalzwerk gewalzt und mittels einer Siebdruckmaschine auf ein planares Substrat aus Keramik, Kunststoff oder Leiterplattenmaterial (vorzugsweise Al₂O₃ oder Polycarbonat) verdruckt und durch Tempern ausgehärtet. Als eine besonders vorteilhafte Anwendung kann dabei z.B. ein käufliches rutheniumoxidhaltiges Präparat der Firma GEM Ltd in Pontypool, UK verwendet werden, welches sich durch eine sehr gute Verarbeitbarkeit auszeichnet. Druck von Ableitung und Isolation erfolgen in gleicher, bekannter Weise.

In einer kostengünstigen Variante eines amperometrischen H₂O₂-Sensor ist vorgesehen, daß die elektrochemisch aktive Sensorschicht ein Oxid der Metalle der VII Nebengruppe des Periodensystems, vorzugsweise MnO₂ in einer Paste aufweist, welche Carbon, z.B. Graphit oder Aktivkohle, sowie als Bindemittel organische Polymere, vorzugsweise Polyvinylacetat, Polyurethan oder Epoxiharze enthält .

### Beispiel für elektrochemisch aktive Sensorschicht mit MnO₂:

Auf einen Kunstoffträgerteil werden Silberleiterbahnen für die Referenzelektrode, Gegenelektrode und die Enzymarbeitselektrode gedruckt. Die Referenzelektrode wird zumindest im Sensorbereich aus einer Ag/AgCl Paste hergestellt. Die Gegenelektroden werden mit einer Carbonpaste im Sensorbereich überschichtet. Im gleichen Arbeitsschritt wird die Brückenschicht aus Carbonpaste für die Arbeitselektrode hergestellt. Die Arbeitselektrode wird aus einer Mischung aus 5% Braunstein in einer Carbonpaste im Sensorbereich aufdispensiert. Im Anschluß wird das gesamte System mit Ausnahme der später mit Probenflüssigkeit zu kontaktierenden Elektrodenspots und der dem Signalabgriff dienenden Leiterbahnenden mit einem Isolationslack überzogen. Der Sensor kann somit zur Bestimmung von Wasserstoffperoxid oder in einer weiteren Ausbaustufe als Enzymelektrode verwendet werden. Dafür wird ein Tropfen einer 10%igen Lösung von Glucoseoxidase (oder auch einer 2,5%igen Lösung von Laktatoxidase) in Wasser aufgebracht, oder alternativ in einer sebstvernetzenden Polyacrylatmatrix. Danach kann eine Deckmembran aus einer Polymerlösung aufgebracht werden.

Alternativ dazu kann der Basissensor, wie aus der einschlägigen Literatur bekannt, mit einer Interferenzsperrmembran beschichtet werden.

Die Herstellung der Brückenschicht kann nicht nur aus Carbonpaste, sondern auch aus Arbeitselektrodenmaterial (MnO₂ in Carbonpaste) erfolgen.

Die Erfindung wird im Folgenden anhand von Zeichnungen näher erläutert. Es zeigen
- Fig. 1: einen elektrochemischen Sensor gemäß Stand der Technik in einer Schnittdarstellung, die
- Fig. 2, 3 und 5: erfindüngsgemäße elektrochemische Sensoren,
- Fig. 4: eine nicht erfindungsgemäße variant und
- Fig. 6 und 7: Unterschiede des Polarisationsverlaufes bei Sensoren mit bzw. ohne Brückenschicht. Die Dicke der einzelnen Schichten, welche nur 5 bis 40 µm beträgt, ist in allen Figuren stark überhöht dargestellt.

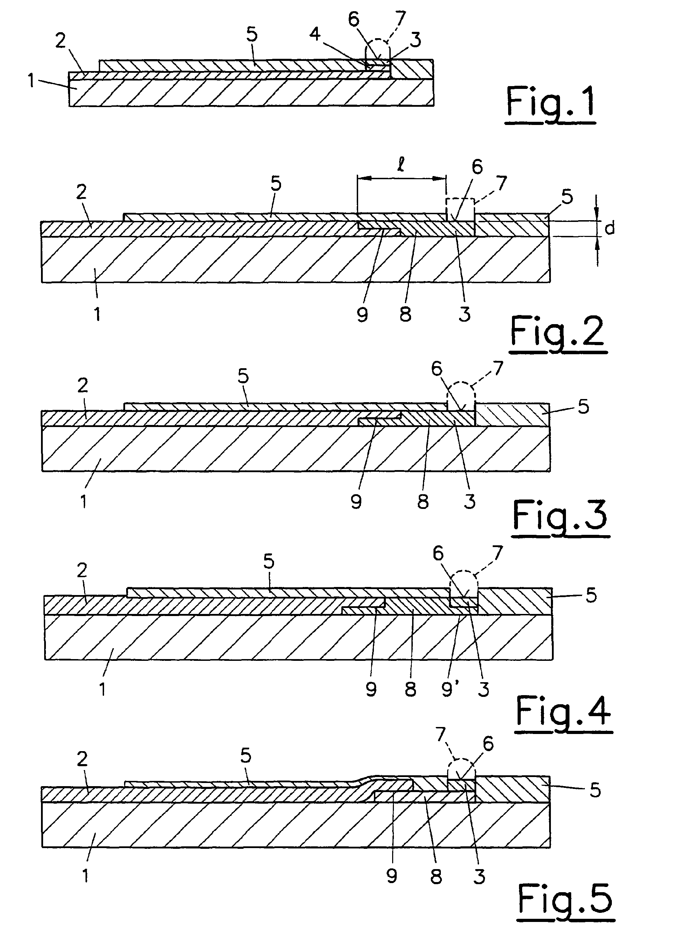

Der in Fig. 1 dargestellte elektrochemische Sensor gemäß Stand der Technik weist ein planares, elektrisch isolierendes Substrat 1 auf, auf welches mittels Schichttechnologie (s.o.) eine Leiterbahn 2, beispielsweise aus Silber, aufgedruckt ist. An einem Ende der Leiterbahn 2 befindet sich die als Sensorspot ausgeführte elektrochemisch aktive Sensorschicht 3, welche zur Leiterbahn 2 mit einer Zwischenschicht 4 unterlegt sein kann. Mit 5 ist eine elektrisch isolierende Deckschicht bezeichnet, welche den Meßbereich 6 der elektrochemisch aktiven Sensorsschicht 3 freiläßt. Lediglich strichliert ist eine Meßkammer bzw. ein Meßkanal 7 angedeutet. Die Leiterbahn bei bekannten elektrochemischen Sensoren besteht zumeist aus Silber, so daß Silberionen relativ leicht in die direkt darüberliegende oder nur durch eine dünne Zwischenschicht 4 getrennte elektrochemisch aktive Sensorschicht 3 gelangen können, wodurch die oben beschriebenen Nachteile auftreten.

Bei den erfindungsgemäßen Ausführungsvarianten gemäß Fig. 2 bis 5 erfolgt die Kontaktierung der elektrochemisch aktiven Sensorschicht 3 mit der Leiterbahn 2 jeweils durch eine aus dem Meßbereich 6 im wesentlichen parallel zur Substratoberfläche wegführende, elektrisch leitende Brückenschicht 8, welche aus einem korrosionsbeständigen Material besteht. Das Verhältnis aus Länge 1 der Brückenschicht 8 zu deren Dicke d ist >5, vorzugsweise >50 (siehe Fig. 2).

In den Ausführungsvarianten gemäß Fig. 2 und 3 besteht die Brückenschicht 8 aus dem Material der elektrochemisch aktiven Sensorschicht 3 und kann somit in einem Arbeitsgang mit der Sensorschicht auf das Substrat 1 aufgebracht werden. Zur besseren Kontaktierung können sich die Brückenschicht 8 und die Leiterbahn 2 in deren Kontaktbereich 9 überlappen. Besonders vorteilhaft an den Ausführungvarianten gemäß Fig. 2 und 3 ist dabei die Möglichkeit, den Druck der elektrisch aktiven Sensorschicht (3) und der elektrischen Ableitung (2) in beliebiger Reihenfolge durchzuführen bzw. die Druckreihenfolge zwischen der Leiterbahn 2 und der elektrochemisch aktiven Sensorschicht 3 zu variieren. Es kann beispielsweise zuerst die Sensorschicht 3 und danach die Leiterbahn 2 gedruckt werden. Dies kann in einem speziellen Anwendungsfall auch den Gebrauch von Pasten ermöglichen, die ansonsten aufgrund ihrer Neigung zur Rißbildung nicht verwendet werden können.

In der nicht erfindungsgemäßen variante gemäß Fig. 4 ist zwischen der elektrochemisch aktiven Sensorschicht 3 und der Leiterbahn 2 eine Elektrolytbrücke als Brückenschicht 8 angeordnet, welche mit der Leiterbahn 2 und der elektrochemisch aktiven Schicht 3 jeweils Überlappungsbereiche 9, 9' aufweist.

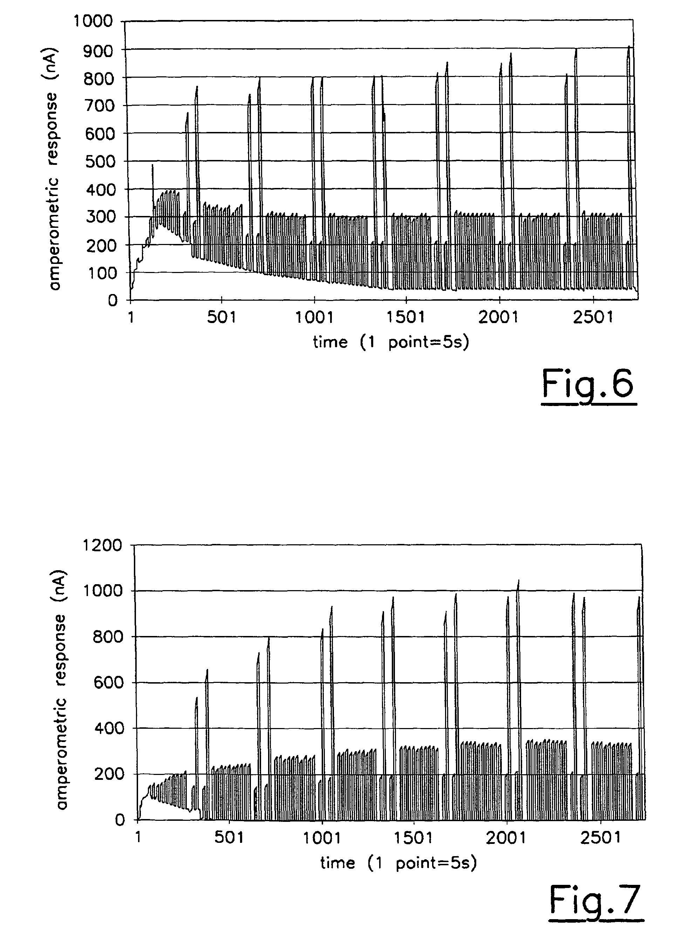

Bei der Ausführungsvariante nach Fig. 5 besteht die Brückenschicht 8 aus Carbon, wobei für die relativ kurze Strecke zwischen Sensorspot 3 und Leiterbahn 2 von 1 bis 2 mm ausreichend gute Leitfähigkeit gewährleistet ist.

Als Beispiel sind in den Figs. 6 und 7 die Unterschiede des Polarisationsverlaufs gezeigt, welche amperometrische MnO₂ Sensoren zur Bestimmung von Wasserstoffperoxid mit zusätzlich immobilisiertem Enzym, in diesem Falle Glucose-Oxidase, mit und ohne die erfindungsgemäße Brückenschicht zeigen. Fig. 6 zeigt den zeitlichen Polarisationsverlauf eines Sensors mit einer Leiterbahn aus Ag/AgCl-paste bis direkt unter die Arbeitselektrode. Der in Fig. 6 dargestellte Polarisationsverlauf zeigt einerseits den Nullstrom als auch den Arbeitsstrom des Sensors bei einer Messung von abwechselnd 5 mM Glucose, 25 mM Glucose, 10 Rinderserumproben, 5 mM Glucose und 25 mM Glucose. Jede dieser Proben wird mit einer Glucose-freien Lösung ausgespült und der Nullstrom als Basis gemessen. In der dargestellten Zeit in Fig. 6 und 7 werden insgesamt 8 dieser Zyklen durchlaufen was einer Gesamtmeßzeit von ca. 4 Stunden entspricht. Fig. 7 zeigt den Polarisationsverlauf einer baugleichen Elektrode jedoch mit erfindungsgemäßer Brückenschicht aus einer Carbonpaste. Der dargestellte Meßzyklus ist mit dem aus Fig. 6 konform. Es ist aus den Abbildungen klar zu erkennen, daß die Brückenschicht die Polarisationphase (Zeit bis zu einem kleinen konstanten Nullstrom) sowohl zeitlich verkürzt, als auch die Höhe des Polarisationsstroms deutlich begrenzt So ist mit Brückenschicht der Nullstrom nach spätestens 30 Minuten auf 0 nA, wohingegen ohne Brückenschicht auch nach 4 Stunden noch ein Nullstrom von ca. 35 nA zu messen ist

Bei allen erfindungsgemäßen Ausführungsvarianten ist die aus Silber oder Kupfer bestehende Leiterbahn 2 durch eine Brückenschicht 8 vom Sensorspot 3 getrennt, wodurch ein Eindiffundieren von Fremdionen bzw. ein nachteiliger Effekt durch Lokalelemente wirksam verhindert wird.

## Patentansprüche

1. Elektrochemisches Sensorelement, welches in zumindest einem Bereich eines elektrisch isolierenden, planaren Substrates (1) eine als Dickschichtpaste aufgetragene, elektrochemisch aktive Sensorschicht (3) aufweist, deren Oberfläche in einem Messbereich (6) von der wässrigen Messprobe kontaktierbar ist, wobei zur Signalableitung zumindest eine ebenfalls als Dickschichtpaste auf das Substrat (1)aufgetragene, ein dem Signalabgriff dienendes Ende aufweisende Leiterbahn (2) vorgesehen ist und die Sensorschicht zumindest ein Oxid eines Metalls aus der VII und VIII Nebengruppe des Periodensystems als sensorische Komponente enthält, **dadurch gekennzeichnet, dass** zur Vermeidung von Interferenzen zwischen Leiterbahn (2) und elektrochemisch aktiver Sensorschicht (3), insbesondere zur Vermeidung einer lateralen Diffusion von Ionen aus der Leiterbahn (2) die Kontaktierung der elektrochemisch aktiven Sensorschicht (3) mit der Leiterbahn (2) außerhalb des Messbereichs (6) durch eine aus dem Messbereich (6) im Wesentlichen parallel zur Substratoberfläche wegführende, korrosionsbeständige, elektrisch leitende Brückenschicht (8) erfolgt, welche im Verhältnis zur Leiterbahn (2) kurz ausgebildet ist, wobei das Material der Brückenschicht (8) zum Material der Leiterbahn (2) unterschiedlich ist und wobei die Brückenschicht (8) aus dem Material der elektrochemisch aktiven Sensorschicht (3) besteht und in einem Arbeitsgang mit der Sensorschicht (3) auf das Substrat (1) aufbringbar ist.

2. Sensorelement nach Anspruche 1, **dadurch gekennzeichnet, dass** die elektrisch aktive Sensorschicht (3) samt Brückenschicht (8) und die elektrische Ableitung (2) in beliebiger Reihenfolge aufbringbar sind.

3. Elektrochemisches Sensorelement, welches in zumindest einem Bereich eines elektrisch isolierenden, planaren Substrates (1) eine als Dickschichtpaste aufgetragene, elektrochemisch aktive Sensorschicht (3) aufweist, deren Oberfläche in einem Messbereich (6) von der wässrigen Messprobe kontaktierbar ist, wobei zur Signalableitung zumindest eine ebenfalls als Dickschichtpaste auf das Substrat (1) aufgetragene, ein dem Signalabgriff dienendes Ende aufweisende Leiterbahn (2) vorgesehen ist und die Sensorschicht zumindest ein Oxid eines Metalls aus der VII und VIII Nebengruppe des Periodensystems als sensorische Komponente enthält, **dadurch gekennzeichnet, dass** zur Vermeidung von Interferenzen zwischen Leiterbahn (2) und elektrochemisch aktiver Sensorschicht (3), insbesondere zur Vermeidung einer lateralen Diffusion von Ionen aus der Leiterbahn (2) die Kontaktierung der elektrochemisch aktiven Sensorschicht (3) durch eine aus dem Messbereich (6) im Wesentlichen parallel zur Substratoberfläche wegführende, elektrisch leitende Brückenschicht (8) erfolgt, welche im Verhältnis zur Leiterbahn (2) kurz ausgebildet ist, die Leiterbahn (2) außerhalb des Messbereichs (6) kontaktiert und aus einer zum Material der Leiterbahn (2) und der Sensorschicht (3) unterschiedlichen, korrosionsbeständigen Carbonpaste besteht.

4. Sensorelement nach Anspruch 3, **dadurch gekennzeichnet, dass** die elektrochemisch aktive Sensorschicht (3) auf einem Ende der Brückenschicht (8) aufgebracht ist.

5. Sensorelement nach einem der Ansprüche 1 bis 4, **dadurch gekennzeichnet, dass** das Verhältnis aus Länge l der Brückenschicht (8) zu deren Dicke d größer 5 vorzugsweise größer 50 ist.

6. Sensorelement nach einem der Ansprüche 1 bis 5, **dadurch gekennzeichnet, dass** sich die Brückenschicht (8) und die Leiterbahn (2) in deren Kontaktbereich (9) überlappen.

7. Sensorelement nach einem der Ansprüche 1 bis 6, **dadurch gekennzeichnet, dass** die elektrochemische aktive Sensorschicht (3) zumindest ein Oxid der Metalle der VIII Nebengruppe des Periodensystems, vorzugsweise RuO₂, sowie als Bindemittel organische Polymere, vorzugsweise Polyvinylacetat, Polyurethan oder Epoxiharze enthält.

8. Sensorelement nach einem der Ansprüche 1 bis 6, **dadurch gekennzeichnet, dass** die elektrochemisch aktive Sensorschicht (3) ein Oxid der Metalle der VII Nebengruppe des Periodensystems, vorzugsweise MnO₂ in einer Paste aufweist, welche Carbon, z.B. Graphit oder Aktivkohle, sowie als Bindemittel organische Polymere, vorzugsweise Polyvinylacetat, Polyurethan oder Epoxiharze enthält.

## Claims

1. Electrochemical sensor element, which is provided in at least one region of an electrically insulating, planar substrate (1) with an electrochemically active sensor layer (3) applied as a thick-film paste, the surface of which can be brought into contact in a measuring area (6) with the aqueous sample to be determined, at least one conductive path (2) with one signal pick-up end being provided for signal pick-up, which is also applied on the substrate (1) as a thick-film paste, and the sensor layer containing at least one oxide of a metal from subgroups VII and VIII of the Periodic Table as sensor component, **characterised in that** in order to avoid interferences between conductive path (2) and electrochemically active sensor layer (3), and especially to avoid any lateral diffusion of ions from the conductive path (2), contact between the electrochemically active sensor layer (3) and the conductive path (2) outside of the measuring area (6) is effected by a corrosion-resistant, electrically conductive bridge layer (8) departing from said measuring area (6) in a direction essentially in parallel with the surface of the substrate, said bridge layer (8) being of a relatively short length compared to the conductive path (2), and the material of the bridge layer (8) differing from that of the conductive path (2), the bridge layer (8) consisting of the material of the electrochemically active sensor layer (3), such that it may be applied on the substrate (1) together with the sensor layer (3) in one and the same processing step.

2. Sensor element according to claim 1, **characterised in that** the electrically active sensor layer (3) including the bridge layer (8) and the electrically conductive path (2) may be applied in any sequence desired.

3. Electrochemical sensor element, which is provided in at least one region of an electrically insulating, planar substrate (1) with an electrochemically active sensor layer (3) applied as a thick-film paste, the surface of which can be brought into contact in a measuring area (6) with the aqueous sample to be determined, at least one conductive path (2) with one signal pick-up end being provided for signal pick-up, which is also applied on the substrate (1) as a thick-film paste, and the sensor layer containing at least one oxide of a metal from subgroups 7 and 8 of the Periodic Table as sensor component, **characterised in that** in order to avoid interferences between conductive path (2) and electrochemically active sensor layer (3), and especially to avoid any lateral diffusion of ions from the conductive path (2), contacting of the electrochemically active sensor layer (3) is effected by an electrically conductive bridge layer (8) departing from the measuring area (6) in a direction essentially parallel to the surface of the substrate, said bridge layer (8) being relatively short compared to the conductive path (2), contacting the conductive path (2) outside of the measuring region (6) and consisting of a corrosion-resistant carbon paste different from the material of the conductive path (2) and the sensor layer (3).

4. Sensor element according to claim 3, **characterised in that** the electrochemically active sensor layer (3) is applied on one end of the bridge layer (8).

5. Sensor element according to any of claims 1 to 4, **characterised in that** the ratio of length I to thickness d of the bridge layer (8) is greater 5, and preferably greater 50.

6. Sensor element according to any of claims 1 to 5, **characterised in that** the bridge layer (8) and the conductive path (2) overlap in their contact region (9).

7. Sensor element according to any of claims 1 to 6, **characterised in that** the electrochemically active sensor layer (3) contains at least one oxide of the metals of subgroup 8 of the Periodic Table, i.e. preferably RuO₂, and organic polymers for bonding, i.e. preferably polyvinyl acetate, polyurethane, or epoxy resins.

8. Sensor element according to any of claims 1 to 6, **characterised in that** the electrochemically active sensor layer (3) contains an oxide of the metals of subgroup 7 of the Periodic Table, i.e. preferably MnO₂, incorporated in a paste containing carbon, such as graphite or activated charcoal, and organic polymers for bonding, i.e. preferably polyvinyl acetate, polyurethane, or epoxy resins.

## Revendications

1. Capteur électrochimique, qui présente dans au moins une zone d'un substrat plan isolant électriquement (1) une couche de capteur active électrochimiquement (3), appliquée sous forme de pâte en couches épaisses, dont la surface peut être contactée par l'échantillon de mesure aqueux dans une zone de mesure (6), au moins une piste conductrice (2) étant prévue, laquelle présente une extrémité servant à la prise du signal, et est appliquée également sous forme de pâte en couches épaisses sur le substrat (1) pour le branchement du signal, et la couche de capteur contenant au moins un oxyde d'un métal provenant du groupe secondaire VII et VIII du système périodique des éléments comme composant de capteur, **caractérisé en ce que**, pour éviter les interférences entre la piste conductrice (2) et la couche de capteur active électrochimiquement (3), en particulier pour éviter une diffusion latérale des ions à partir de la piste conductrice (2), la mise en contact de la couche de capteur active électrochimiquement (3) avec la piste conductrice (2) en dehors de la zone de mesure (6) s'effectue par le biais d'une couche de pontage (8) électriquement conductrice, résistant à la corrosion et s'éloignant de la plage de mesure (6) sensiblement parallèlement par rapport à la surface du substrat, laquelle couche de pontage (8) étant courte par rapport à la piste conductrice (2), le matériau de la couche de pontage (8) étant différent du matériau de la piste conductrice (2), et la couche de pontage (8) se composant du matériau de la couche de capteur électrochimiquement active (3) et pouvant être déposée en une opération avec la couche de capteur (3) sur le substrat (1).

2. Capteur électrochimique selon la revendication 1, **caractérisé en ce que** la couche de capteur électrochimique active (3) conjointement avec la couche de pontage (8) et la dérivation électrique (2) peuvent être disposées dans un ordre quelconque.

3. Capteur électrochimique, qui présente dans au moins une zone d'un substrat plan isolant électriquement (1) une couche de capteur active électrochimiquement (3) appliquée sous forme de pâte en couches épaisses et dont la surface peut être contactée par l'échantillon de mesure aqueux dans une zone de mesure (6), au moins une piste conductrice (2) étant prévue, laquelle présente une extrémité servant à la prise du signal, et est appliquée également sous forme de pâte en couches épaisses sur le substrat (1) pour le branchement du signal, et la couche de capteur contenant au moins un oxyde d'un métal provenant du groupe secondaire VII et VIII du système périodique des éléments comme composant de capteur, **caractérisé en ce que**, pour éviter les interférences entre la piste conductrice (2) et la couche de capteur active électrochimiquement (3), en particulier pour éviter une diffusion latérale des ions à partir de la piste conductrice (2), la mise en contact de la couche de capteur active électrochimiquement (3) s'effectue par le biais d'une couche de pontage (8) électriquement conductrice, s'éloignant de la plage de mesure (6) sensiblement parallèlement par rapport à la surface du substrat laquelle couche de pontage (8) est courte par rapport à la piste conductrice (2), qui contacte la piste conductrice (2) en dehors de la zone de mesure (6) et qui se compose de pâte de carbone résistante à la corrosion, différente du matériau de la piste conductrice (2) et de la couche de capteur (3).

4. Capteur électrochimique selon la revendication 3, **caractérisée en ce que** la couche de capteur électrochimiquement active (3) est déposée sur une extrémité de la couche de pontage (8).

5. Capteur électrochimique selon l'une des revendications 1 à 4, **caractérisé en ce que** le rapport entre la longueur 1 de la couche de pontage (8) et son épaisseur d est supérieur à 5, de préférence supérieur à 50.

6. Capteur électrochimique selon l'une des revendications 1 à 5, **caractérisé en ce que** la couche de pontage (8) et la piste conductrice (2) se chevauchent au niveau de leur zone de contact (9).

7. Capteur électrochimique selon l'une des revendications 1 à 6, **caractérisé en ce que** la couche de capteur électrochimiquement active (3) contient au moins un oxyde des métaux du groupe secondaire VIII du système périodique des éléments, de préférence du RuO₂, et des polymères organiques à titre de liants, de préférence de l'acétate de polyvinyle, du polyuréthane ou des résines époxydes.

8. Capteur électrochimique selon l'une des revendications 1 à 6, **caractérisé en ce que** la couche de capteur électrochimiquement active (3) présente un oxyde des métaux du groupe secondaire VII du système périodique des éléments, de préférence du MnO₂, dans une pâte, qui comprend du carbone, par exemple graphite ou charbon actif, ainsi que des polymères organiques à titre de liants, de préférence de l'acétate de polyvinyle, du polyuréthane ou des résines époxydes.
